# EUROPEAN PATENT APPLICATION

(11) **EP 1 921 786 A2**
(43) Date of publication of application: **14.05.2008**
(21) Application number: 07018845.3
(22) Date of filing: 25.09.2007
(51) Int. Cl.: H04L 1/00

(54) **Cell supporting simultaneous and differing concurrent interfering transmission parameters and techniques**

(30) Priority: 18.12.2006 US 641144; 09.11.2006 US 595346
(71) Applicant: Broadcom Corporation, Irvine, CA 92617 (US)
(72) Inventor: Bennett, James c/o Broadcom Corporation, Irvine, CA 92617 (US)
(74) Representative: Jehle, Volker Armin

(57) **Abstract**

A wireless network infrastructure that adapts encoding approach and frame parameters of concurrent interfering transmission and receptions in response to dynamically varying channel conditions. The channel conditions are determined by number of associated wireless end point devices within a cell, their capabilities, anticipated bandwidth usage, QOS (Quality Of Service) demands, priority of service and idle states, cell overlap interferences, near-far interferences, and noises. The wireless network infrastructure consists of an access point that is adapted to receive and transmit concurrent interfering transmissions utilizing a plurality of encoding approach and frame parameters. In addition, the wireless network infrastructure consists of a plurality of end point devices that are adapted to transmit and receive using concurrent interfering transmissions with one or more of the plurality of encoding approach and frame parameters.

## Description

### CROSS REFERENCES TO RELATED APPLICATIONS

The present application is a continuation-in-part of Utility Application Serial No. 11/595,346 filed on November 9, 2006, and entitled "ADAPTIVE NETWORK SUPPORTING SINGLE TO CONCURRENT INTERFERING WIRELESS TRANSMISSIONS," (BP5761), which is incorporated herein in its entirety by reference for all purposes.

The present application is related to the following co-pending applications filed on even date herewith:
1. Utility Application Serial No. 11/xxx,xxx filed on December xx, 2006, and entitled "CELL PROTOCOL ADAPTING BETWEEN SINGLE AND CONCURRENT INTERFERING TRANSMISSIONS AND RECEPTIONS BASED ON CHANNEL CONDITIONS," (BP5788);
2. Utility Application Serial No. 11/xxx,xxx filed on December xx, 2006, and entitled "WIRELESS NETWORK THAT ADAPTS CONCURRENT INTERFERING TRANSMISSION PARAMETERS BASED ON CHANNEL CONDITIONS," (BP5929); and
3. Utility Application Serial No. 11/xxx,xxx filed on December xx, 2006, and entitled "WIRELESS NETWORK THAT UTILIZES CONCURRENT INTERFERING TRANSMISSION AND MIMO TECHNIQUES," (BP5931), both of which are incorporated by reference in their entirety for all purposes.

### BACKGROUND

### 1. Technical Field

The present invention relates generally to wireless communication; and, more particularly, to wireless access points in a packet switched network.

### 2. Related Art

Wireless access points provide wireless routing services to a plurality of mobile wireless end point devices, and are today in use in a wide variety of public and private environments. A typical use involves wireless Internet or Intranet routing services provided to users of notebook computers in a public environment such as a manufacturing facility, restaurant, or an airport. In general, wireless access points connect mobile wireless end point devices to a backbone network, wirelessly. Wireless access points also provide wireless access to the Internet in private environments such as homes.

Often, in public environments, a plurality of wireless access points is bridged to provide additional coverage area. The communication between wireless access points and the end point wireless devices occur on the basis of predefined sets of rules or protocols. Mobile end point wireless devices include personal or laptop computers, servers, set top boxes and handheld data/communication devices.

The wireless access points, especially in public environments, are subjected to nonuniform loading. This occurs because of variations in channel conditions that involve number of associated mobile wireless end point devices within a cell, bandwidth usage, QOS (Quality Of Service), priority of service, interferences, and noises. This in turn creates performance bottlenecks in the wireless local area network, resulting in poor bits per second transfer rate and broken connections.

These channel conditions vary dynamically over a period of time, in public environments such as restaurants and airports, depending upon the above mentioned factors. For example, a mobile end user communicating using VoIP (Voice over Internet Protocol) may face drag in voice and disconnections periodically.

These and other limitations and deficiencies associated with the related art may be more fully appreciated by those skilled in the art after comparing such related art with various aspects of the present invention as set forth herein with reference to the figures.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, an access point circuitry supporting reception of concurrent interfering transmissions from a plurality of end point devices is provided, the access point circuitry comprising:
receiver circuitry that receives the concurrent interfering transmissions from the plurality of end point devices, the concurrent interfering transmissions being constructed using a first encoding approach;
processing circuitry, communicatively coupled to the receiver circuitry, that decodes the concurrent interfering transmissions;
transmitter circuitry communicatively coupled to the processing circuitry;
the processing circuitry, based on a change in a channel condition, generates an instruction to change the first encoding approach to a second encoding approach;
the processing circuitry delivers the instruction to at least one of the plurality of end point devices via the transmitter circuitry;
the receiver circuitry receives the concurrent interfering transmissions that is constructed using the second encoding approach; and
the processing circuitry decodes the received the concurrent interfering transmissions that is constructed using the second encoding approach.

Advantageously, the processing circuitry delivers the instruction at the beginning of a frame.

Advantageously, the frame comprising one or more sub-frames.

Advantageously, the instruction is applicable to one of the sub-frames.

Advantageously, the first encoding approach comprising a first concurrent interfering transmission mode.

Advantageously, the second encoding approach comprising a second concurrent interfering transmission mode.

Advantageously, the channel condition comprising load on the access point.

Advantageously, the load is determined by number of the plurality of end point devices that participate in the communication.

Advantageously, the load is determined by the quality of service demands from the plurality of end point devices associated with the access point circuitry.

Advantageously, the load is determined by the noise associated with the access point circuitry.

Advantageously, the load is determined by the interference associated with the plurality of end point devices.

According to an aspect of the invention, an end point device circuitry is provided that supports concurrent interfering receptions, the end point device circuitry comprising:
receiver circuitry that receives a concurrent interfering transmission;
processing circuitry, communicatively coupled to the receiver circuitry, that detects the concurrent interfering transmission;
the processing circuitry receives an instruction to change a first encoding approach to a second encoding approach;
the processing circuitry responds to the instruction by adapting to the second encoding approach; and
the processing circuitry detects data from the received concurrent interfering transmission that uses the second encoding approach.

Advantageously, the first encoding approach comprising a first concurrent interfering transmission mode.

Advantageously, the second encoding approach comprising a second concurrent interfering transmission mode.

Advantageously, a third plurality of concurrent interfering transmission modes comprising modes that are determined by at least one frame parameter.

Advantageously, the at least one frame parameter comprising payload length.

According to an aspect of the invention, a method is provided performed by an access point that communicates a plurality of packets with a plurality of end point devices, in a wireless network infrastructure, the method comprising:
establishing communication with each of the plurality of end point devices;
identifying channel conditions;
determining a transmission mode based upon encoding approach and frame parameters;
broadcasting the transmission mode; and
communicating using the transmission mode, with the plurality of end point devices.

Advantageously, the transmission mode comprising at least one of single transmission mode, full concurrent interfering transmission mode, one of plurality of partial concurrent interfering transmission modes or one of plurality of encoding approach modes.

Advantageously, each of the plurality of partial concurrent interfering transmission modes allow selected number of the plurality of end point devices to transmit or receive concurrently.

Advantageously, the plurality of encoding approach modes are determined by the encoding approach used.

Other features and advantages of the present invention will become apparent from the following detailed description of the invention made with reference to the accompanying drawings.

### BRIEF DESCRIPTION OF THE DRAWINGS

FIG. 1 is a block diagram illustrating a cell supporting simultaneous and differing concurrent interfering transmission parameters and techniques wherein a wireless access point adapts encoding approach and frame parameters of concurrent interfering transmissions and receptions, based on varying channel conditions;
FIG. 2 is a schematic block diagram of a wireless access point built in accordance with the embodiment of FIG. 1;
FIG. 3 is a schematic block diagram illustrating downstream transmitter portion of a wireless access point, built in accordance with the embodiment of FIG. 2;
FIG. 4 is a schematic block diagram illustrating downstream receiver portion of a wireless access point, built in accordance with the embodiment of FIG. 2;
FIG. 5 is a schematic block diagram of a multiple algorithm concurrent interfering transmission capable end point device built in accordance with the embodiment of FIG. 1;
FIG. 6 is an exemplary timing diagram illustrating multiple algorithm concurrent interfering transmission modes, during contention free and contention periods;
FIG. 7 is an exemplary timing diagram illustrating multiple algorithm partial concurrent interfering and full concurrent interfering transmission modes, during contention free and contention periods;
FIG. 8 is a flow diagram illustrating general functionality of a wireless access point that adapts encoding approach and frame parameters of concurrent interfering transmissions and receptions, based on varying channel conditions, in accordance with the present invention; and
FIG. 9 is a flow diagram illustrating detailed functionality of a wireless access point that adapts encoding approach and frame parameters of concurrent interfering transmissions and receptions, based on varying channel conditions, in accordance with one embodiment of the present invention.

### DETAILED DESCRIPTION OF THE DRAWINGS

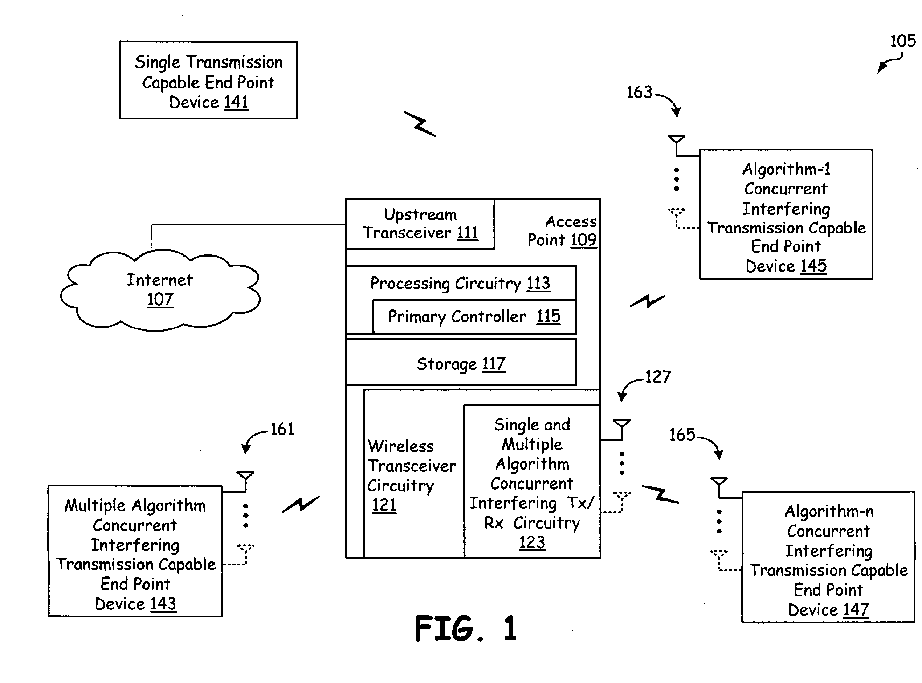

FIG. 1 is a block diagram 105 illustrating a cell supporting simultaneous and differing concurrent interfering transmission parameters and techniques wherein a wireless access point 109 adapts encoding approach and frame parameters of concurrent interfering transmissions and receptions, based on varying channel conditions. In specific, the wireless access point 109 periodically assesses the channel conditions based on various factors such as wireless end point device capabilities, demands of quality of service, anticipated bandwidth usage, idle states, and noise and interference within the cell. Then, the wireless access point 109 adapts encoding approach that makes up concurrent interfering transmission and the corresponding frame parameters. In effect, the wireless access point 109 utilizes one of many possible modes that are derived from various concurrent interfering transmissions encoding approach and further segmenting each of these modes based upon frame parameters.

Thus, concurrent interfering transmission modes, in one embodiment of the present invention, include a plurality of modes based on encoding approach such as algorithm-1 concurrent interfering transmission mode to algorithm-n concurrent interfering transmission mode. Similarly, the concurrent interfering transmission modes also include a plurality of modes based on frame parameters such as single transmission mode, a plurality of partial concurrent interfering transmission modes (say, partial concurrent interfering transmission modes a through n) and full concurrent interfering transmission mode. At any given time within a frame, the wireless access point 109 utilizes one of these modes to transmit or receive. The frame parameters also include payload length. In other embodiments, the logic that operates the wireless access point 109 to adapt encoding approach and frame parameters may vary.

On the basis of the modes mentioned above, each wireless end point device within the cell may come with different capabilities, thus being able to transmit and/or receives in one or more of the modes. The illustration shows four kinds of wireless end point devices 141, 143, 145 and 147, each are capable of operating in one or more of the differing modes.

A single transmission capable end point device 141 is a legacy device that operates only in single transmission mode. During a single transmission mode, the coding aggressiveness is minimal, therefore the overhead associated with coding is also minimal. This mode is suitable, for example, when all of the associated wireless end point devices are only single transmission capable or when the loading on the wireless access point 109 is minimal. During contention free period of a frame that operates in a single transmission mode, the wireless end point devices such as 141 wait for a brief Short Inter Frame Space (SIFS) and then begin to transmit. Similarly, the wireless access point 109 may also transmit data to the wireless end point device 141 during contention free period after a SIFS interval. During contention period, the wireless end point device 141 or the wireless access point 109 place a Request To Send (RTS) signal and after obtaining Clear To Send (CTS) signal from recipient, begin transmitting data. After completion of transmission of data, the wireless end point device 141 or the wireless access point 109 receive an acknowledgement (ACK) signal to confirm that the data is received by the recipient. Any contention from a plurality of devices is resolved on the basis of arbitration, as per protocol.

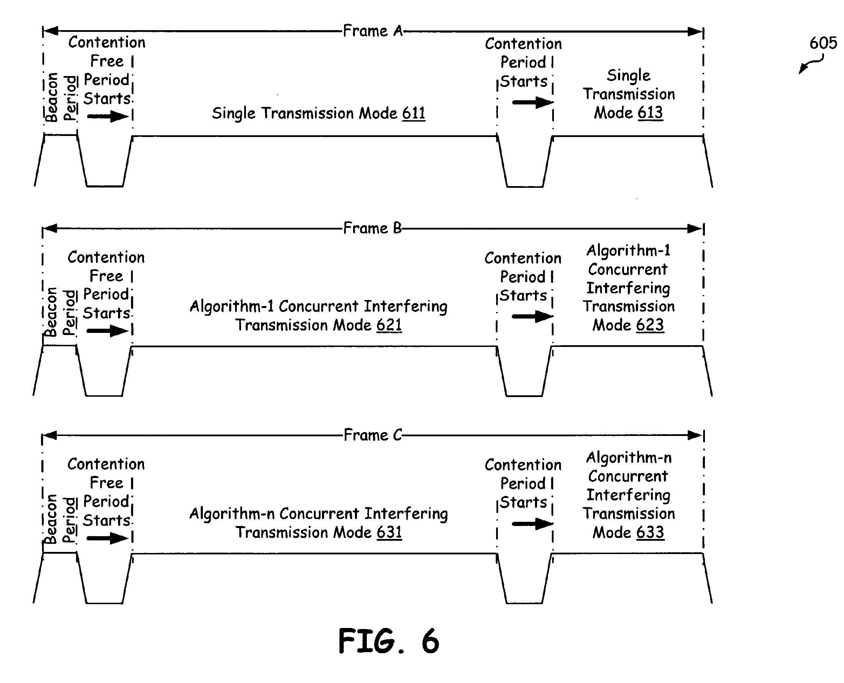

An algorithm-1 concurrent interfering transmission capable end point device 145 may on the other hand operate using only concurrent interfering algorithm-1 code and the wireless access point 109 may be able to adapt only frame parameters related to the alogithm-1 code. Similarly, algorithm-n concurrent interfering transmission capable end point device 147 may operate using only concurrent interfering algorithm-n code. Some other wireless end point devices such as 143 may operate using any one of multiple algorithms available. In such cases, the wireless access point 109 may select any of the modes by selecting one of many available algorithms and their corresponding frame parameters. Example timing diagrams of data transmissions during a contention free period and contention period, in algorithm-1 through n concurrent interfering transmission modes, are illustrated in FIGs. 6.

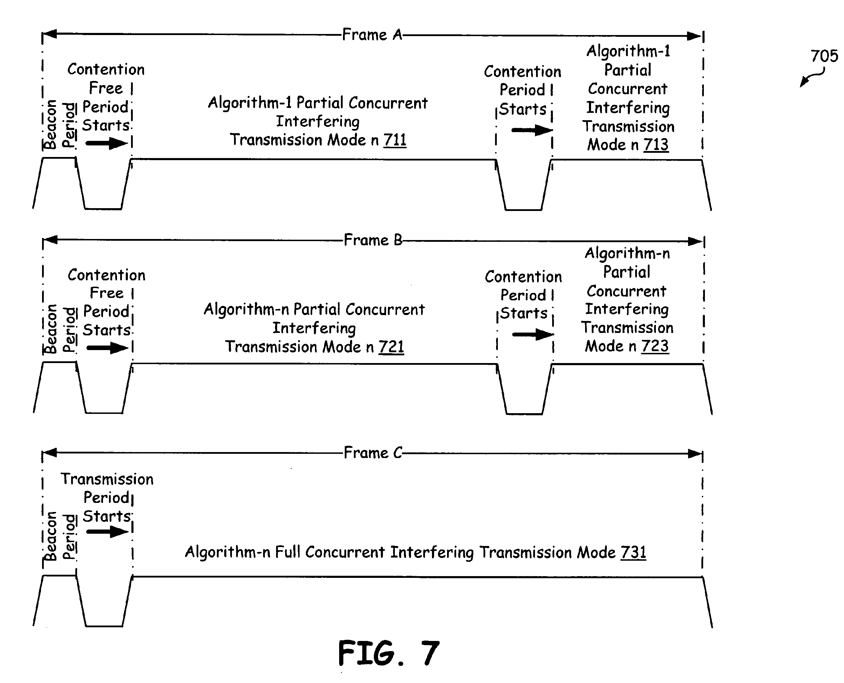

In a partial concurrent interfering transmission mode, viz., partial concurrent interfering transmission modes a through n, the number of associated wireless end point devices such as 143, 145 and 147 that are allowed to communicate with the wireless access point 109 vary depending upon the selected mode. Timing diagram that is applicable to one of plurality of partial concurrent transmission modes is described with reference to the FIG. 7.

For example, the wireless access point 109 may serve a plurality of users carrying mobile wireless end point devices 141, 143, 145, and/or 147 within a cell, installed in a public place. The mobile wireless end point devices 141, 143, 145, and/or 147 may be notebook computers or handheld computing devices of users who utilize the wireless access point services for a brief interval. Arrival and departure of the users vary randomly within the cell and the load on the wireless access point 109 is not uniform throughout the day. The wireless access point 109 periodically assesses the channel conditions and determines number of mobile wireless end point devices 141, 143, 145, and/or 147 that are utilizing the services, their capabilities, bandwidth requirements, quality of service demands, priority of services, idle states. In addition, the wireless access point 109 assesses interference and noise within the cell environment. By considering all these factors, then the wireless access point 109 selects one of the many possible modes mentioned above and informs plurality of wireless end point devices 141, 143, 145, and/or 147.

In a contention free period of a partial concurrent interfering transmission mode, for example, using any one of the algorithms, the wireless access point 109 may allow a selected number of wireless end point devices 141, 143, 145 and/or 147 to transmit or receive. The wireless access point 109 detects any such signals received from the selected number of wireless end point devices 141, 143, 145, and/or 147 by utilizing appropriate detection algorithm. One of the plurality of wireless end point devices 141, 143, 145, and/or 147 may determine that this is a contention free period, identify number of devices utilizing the services of the wireless access point 109 and depending on SIFS may begin to transmit data.

During a contention period, the wireless end point devices 141, 143, 145 and/or 147 may have to place RTS and depending on the CTS from the wireless access point 109 may begin to transmit data. After completion of transmission of data, the wireless end point devices 141, 143, 145 and/or 147 receive ACK signal from the wireless access point 109. A full concurrent interfering transmission mode may not impose any restrictions on the wireless end point devices 141, 143, 145 and/or 147 at all, allowing any number of wireless end point devices 141, 143, 145 and/or 147 to transmit.

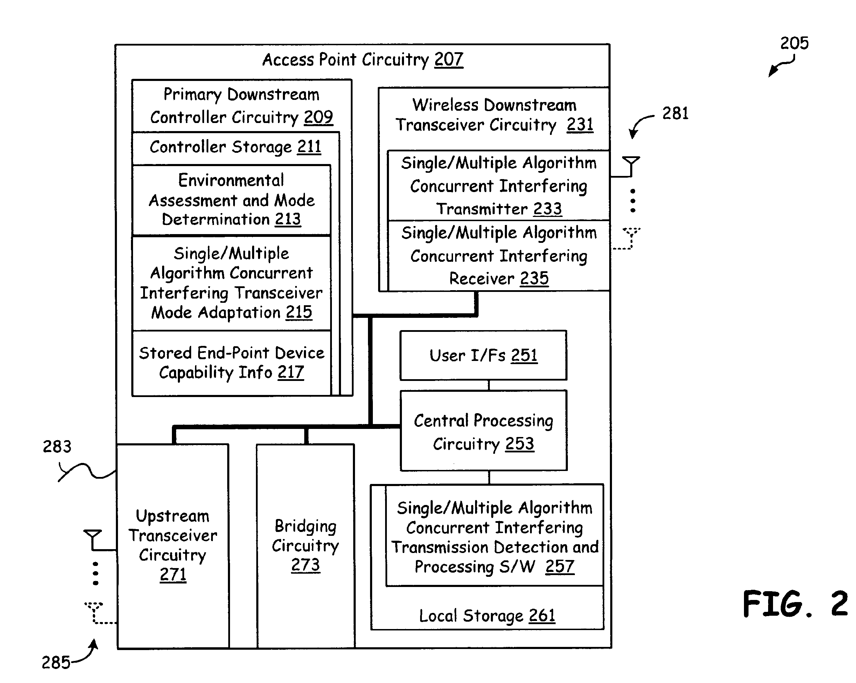

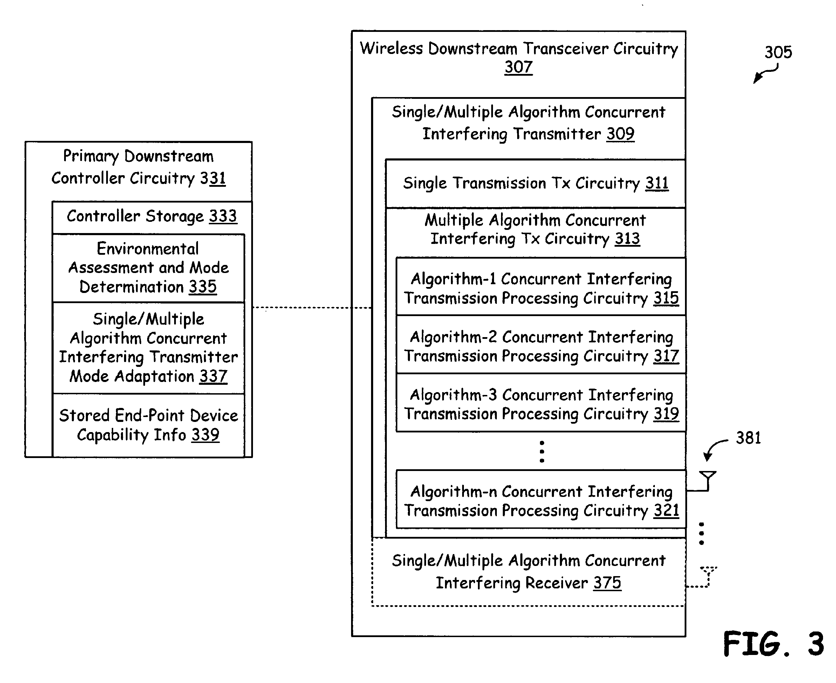

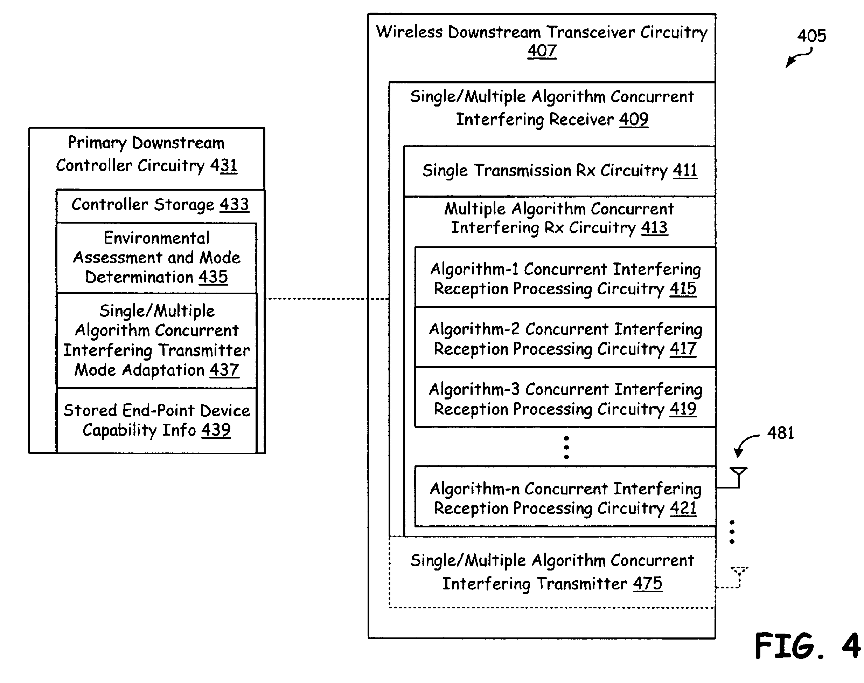

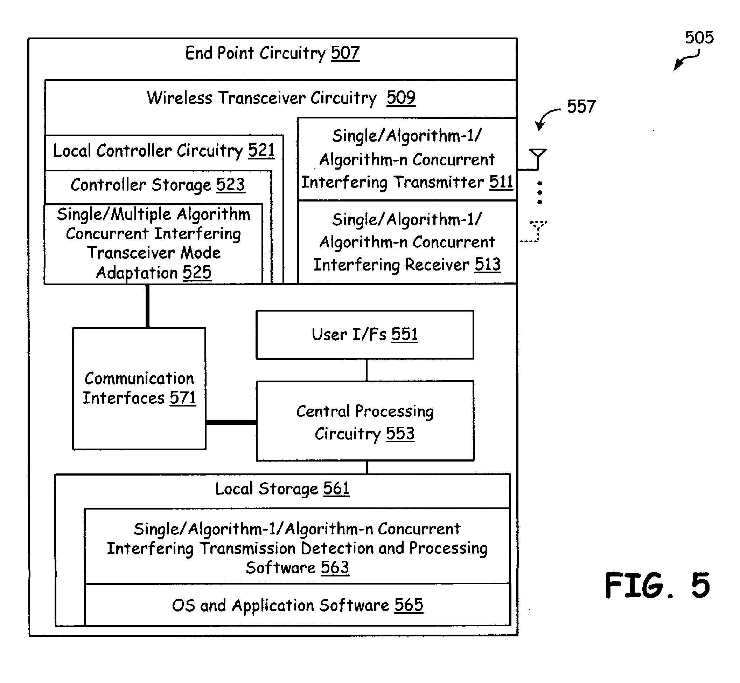

The wireless access point 109 contains a wireless transceiver circuitry 121 that enables adaptations to one of the above mentioned modes based upon encoding approach and frame parameters. The wireless transceiver circuitry 121 further contains single and multiple algorithm concurrent interfering transmission and reception circuitry 123 that is communicatively coupled to a plurality of antennas 127. A processing circuitry 113 and primary controller 115 control the adaptation aspects of the wireless access point 109. A storage 117 may contain necessary software, such as single/multiple algorithm concurrent interfering transmission and detection processing software (not shown) that help process the received data in various modes. An upstream transceiver 111 communicatively couples the wireless access point 109 to a backbone network such as Internet 107. One such embodiment of the wireless access point 109 construction is described with reference to the FIG. 2, and the corresponding wireless transceiver circuitry is described in detail with reference FIGs. 3 and 4. The wireless end point devices such as 143, 145 and 147 may also have a plurality of antennas, such as 161, 163 and 165. A multiple algorithm concurrent interfering transmission capable end point device construction is described with reference to the FIG. 5.

FIG. 2 is a schematic block diagram 205 of a wireless access point built in accordance with the embodiment of FIG. 1. The wireless access point circuitry 207 may represent any of the wireless access points, such as 109 of FIG. 1 that route data packets. The wireless access point circuitry 207 generally includes central processing circuitry 253, local storage 261, user interfaces 251, upstream transceiver circuitry 271, bridging circuitry 273, wireless downstream transceiver circuitry 231 and primary downstream controller circuitry 209. These components communicatively coupled to one another via one or more of a system bus, dedicated communication pathways, or other direct or indirect communication pathways. The central processing circuitry 253 may be, in various embodiments, a microprocessor, a digital signal processor, a state machine, an application specific integrated circuit, a field programming gate array, or other processing circuitry. In addition, in various embodiments, the primary downstream controller circuitry 209 may be a controller card or part of a wireless access point circuitry card containing a microcontroller or microprocessor.

Local storage 261 may be random access memory, read-only memory, flash memory, a disk drive, an optical drive, or another type of memory that is operable to store computer instructions and data. The local storage 261 contains software components such as single/multiple algorithm concurrent interfering transmission detection and processing software 257 that assists the wireless downstream transceiver circuitry 231 in detecting received signal. The received signals may contain concurrent transmissions from a plurality of wireless end point devices using one of plurality of a plurality of modes; components such as single/multiple algorithm concurrent interfering transmission detection and processing software 257 assist in separating these signals by utilizing a corresponding algorithm. In other words, these software components utilize information processing techniques to provide multiple algorithm concurrent interfering transmission facilities to a plurality of concurrent interfering transmission capable end point devices. In addition, they also resolve plurality of concurrent interfering receptions in partial concurrent transmission modes and full concurrent transmission modes. The single/multiple algorithm concurrent interfering transmission detection and processing software 257 may include a plurality of concurrent interfering detection algorithms and concurrent interfering transmission algorithms which assist in processing the data during reception and transmission.

The decisions regarding single transmission mode, partial concurrent interfering transmission modes, full concurrent interfering transmission mode and a plurality of multiple algorithm transmission modes, as well as contention period and contention free period are transmitted to the wireless end point devices during a beacon period, by the primary downstream controller circuitry 209. During the beacon period, the primary downstream controller circuitry 209 informs about the duration of frame or each of the portions of frame, mode(s) and payload lengths to the associated devices, as applicable to next frame(s) or sub-frame(s). The primary downstream controller circuitry 209 determines the durations of these portions based upon many criteria such as number of associated wireless end point devices within a cell, their capabilities, anticipated bandwidth usage, QOS (Quality of Service) demands, priority of service, idle states, cell overlap interferences, near-far interferences and noises. The beacon signals control the aspects of end point wireless devices that include mode of transmission, contention free period accesses and contention period arbitrations. All associated wireless end point devices listen to beacon signals and plan their communication accordingly. In addition, the primary downstream controller circuitry 209 contains controller storage 211. The controller storage 211 contains programming codes such as environmental assessment and mode determination 213 and single/multiple algorithm concurrent interfering transceiver mode adaptation 215 that assist primary downstream controller circuitry 209 to determine a current channel condition, during an initial or a periodic assessment, and assist in the wireless downstream transceiver circuitry's 231 mode adaptations. Stored end-point device capability information 217 assist primary downstream controller circuitry 209 in making decisions regarding adaptations to varying channel conditions.

The wireless downstream transceiver circuitry 231 is equipped with single/multiple algorithm concurrent interfering transmitter 233 and single/multiple algorithm concurrent interfering receiver 235 to handle the physical layer of protocol. Detailed descriptions of single/multiple algorithm concurrent interfering transmitter 233 and single/multiple algorithm concurrent interfering receiver 235 may be found with reference to the FIGs. 3 and 4, respectively. The wireless downstream transceiver circuitry 231 is capable of transmitting and receiving in all possible modes, that is, single transmission and receptions, algorithm-1 concurrent interfering transmission and receptions in partial or full modes through algorithm-n concurrent interfering transmission and receptions in partial or full modes. The wireless downstream transceiver circuitry 231 is communicatively coupled to a plurality of antennas 281 that help communicate using a plurality of radio channels. In one embodiment, the software information processing components mentioned above with regards to the local storage 261 may exist in storage (not shown) of wireless downstream transceiver circuitry 231, to facilitate faster processing.

A bridging circuitry 273 allows bridging of the wireless access point 207 with other wireless access points as well as bridge with a backbone network via an upstream transceiver circuitry 271. The upstream transceiver circuitry 271 contains wired and wireless packet switched interfaces that provides the wireless access point ability to communicatively couple with a backbone network such as Internet, and is connected to a plurality of antennas 285 as well as a wire 283 that communicatively couples to the backbone network. In other embodiments, the access point circuitry 207 of the present invention may include fewer or more components than are illustrated as well as lesser or further functionality. In other words, the illustrated wireless device is meant to merely offer one example of possible functionality and construction in accordance with the present invention.

FIG. 3 is a schematic block diagram 305 illustrating downstream transmitter portion of a wireless access point, built in accordance with the embodiment of FIG. 2. Wireless downstream transceiver circuitry 307 contains single/multiple algorithm concurrent interfering transmitter 309 and single/multiple algorithm concurrent interfering receiver 375. Current illustration shows single/multiple algorithm concurrent interfering transmitter 309 (the downstream transmitter portion) in detail. The single/multiple algorithm concurrent interfering transmitter 309 contains a single transmission transmitter circuitry 311 and multiple algorithm concurrent interfering transmitter circuitry 313. The single transmission transmitter circuitry 311 is a conventional transmitter circuitry that handles transmissions to single transmission capable end point devices as well as multiple algorithm concurrent interfering transmission capable end point devices in single transmission mode.

The multiple algorithm concurrent interfering transmitter circuitry 313 contains a plurality of concurrent interfering transmission processing circuitry such as algorithm-1 concurrent interfering transmission processing circuitry 315, algorithm-2 concurrent interfering transmission processing circuitry 317, algorithm-3 concurrent interfering transmission processing circuitry 319 through algorithm-n concurrent interfering transmission processing circuitry 321. Each of these processing circuitry is capable of processing the signals in corresponding algorithm mode and one of single transmission, plurality of partial concurrent interfering transmission and full concurrent interfering transmission modes. A primary downstream controller circuitry (231 of FIG. 2) 331 determines which of algorithm-1 concurrent interfering transmission processing circuitry 315, algorithm-2 concurrent interfering transmission processing circuitry 317, algorithm-3 concurrent interfering transmission processing circuitry 319 through algorithm-n concurrent interfering transmission processing circuitry 321 is utilized, depending upon the transmission mode. A single/multiple algorithm concurrent interfering transmitter mode adaptation unit 337 determines a mode for transmission based upon channel conditions as determined by environmental assessment and mode determination unit 335. The single/multiple algorithm concurrent interfering transmitter mode adaptation unit 337 utilizes stored end point device capability information 339 in determining a mode for transmission.

In other embodiments, the single/multiple algorithm concurrent interfering transmitter 309 of the present invention may include fewer or more components than are illustrated as well as lesser or further functionality. In other words, the illustrated wireless transmitter is meant to merely offer one example of possible functionality and construction in accordance with the present invention.

FIG. 4 is a schematic block diagram 405 illustrating downstream receiver portion of a wireless access point, built in accordance with the embodiment of FIG. 2. Wireless downstream transceiver circuitry 407 contains single/multiple algorithm concurrent interfering transmitter 475 and single/multiple algorithm concurrent interfering receiver 409. The illustration shows single/multiple algorithm concurrent interfering receiver 409 (the downstream receiver portion) in detail. The single/multiple algorithm concurrent interfering receiver 409 contains a single transmission receiver circuitry 411 and multiple algorithm concurrent interfering receiver circuitry 413. The single transmission receiver circuitry 411 is a conventional receiver circuitry that handles receptions from single transmission capable end point devices as well as multiple algorithm concurrent interfering transmission capable end point devices in single transmission mode.

The multiple algorithm concurrent interfering receiver circuitry 413 contains a plurality of concurrent interfering processing circuitry such as algorithm-1 concurrent interfering reception processing circuitry 415, algorithm-2 concurrent interfering reception processing circuitry 417, algorithm-3 concurrent interfering reception processing circuitry 419 through algorithm-n concurrent interfering reception processing circuitry 421. Each of these processing circuitry is capable of processing the signals in corresponding algorithm mode and one of single transmission, plurality of partial concurrent interfering transmission and full concurrent interfering transmission modes, during reception. A primary downstream controller circuitry (231 of FIG. 2) 431 determines which of algorithm-1 concurrent interfering reception processing circuitry 415, algorithm-2 concurrent interfering reception processing circuitry 417, algorithm-3 concurrent interfering reception processing circuitry 419 through algorithm-n concurrent interfering reception processing circuitry 421 is utilized, depending upon the transmission mode. A single/multiple algorithm concurrent interfering transmitter mode adaptation unit 437 determines a mode for transmission based upon channel conditions as determined by environmental assessment and mode determination unit 435. The single/multiple algorithm concurrent interfering transmitter mode adaptation unit 437 utilizes stored end point device capability information 439 in determining a mode for transmission.

In other embodiments, the single/multiple algorithm concurrent interfering receiver 409 of the present invention may include fewer or more components than are illustrated as well as lesser or further functionality. In other words, the illustrated wireless receiver is meant to merely offer one example of possible functionality and construction in accordance with the present invention.

FIG. 5 is a schematic block diagram 505 of a multiple algorithm concurrent interfering transmission capable end point device built in accordance with the embodiment of FIG. 1. The wireless end point device circuitry 507 may represent any of the wireless end point devices from which packets originate or within which packets terminate and may represent any of the multiple algorithm concurrent interfering transmission capable wireless end point devices of FIG. 1, such as 143. The wireless end point device 507 generally includes central processing circuitry 553, local storage 561, user interfaces 551, wireless transceiver circuitry 509 and communication interfaces 571. These components communicatively coupled to one another via one or more of a system bus, dedicated communication pathways, or other direct or indirect communication pathways.

The central processing circuitry 553 may be, in various embodiments, a microprocessor, a digital signal processor, a state machine, an application specific integrated circuit, a field programming gate array, or other processing circuitry. In addition, in various embodiments, the wireless transceiver circuitry 509 may consist of a local controller circuitry 521 containing a microcontroller or microprocessor. The local controller circuitry 521 manages control functionality of wireless transceiver circuitry 509, by planning communication in one of single transmission mode, a plurality of partial concurrent interfering transmission modes, full concurrent interfering transmission mode and multiple algorithm concurrent interfering transmission modes during any given single frame, group of frames or a portion of frame. The local controller circuitry 521 listens to the control signals during beacon period and adheres to the adapted frame characteristics. The control functionality of the wireless transceiver circuitry 509 include generating radio capability information and transmitting it to a wireless access point during a beacon period as well as receiving the control signals from an associated wireless access point, interpreting it and plan communication accordingly. Controller storage 523 contains single/multiple algorithm concurrent interfering transceiver mode adaptation unit 525 that assists in adapting the wireless transceiver circuitry 509 to a mode dictated by an associated wireless access point.

The wireless transceiver circuitry 509 is also equipped with a single/algorithm-1/algorithm-n concurrent interfering transmitter 511 and single/algorithm-1/algorithm-n concurrent interfering receiver 513. The units 511 and 513 may have multiple algorithm capability such that they possibly operate in two or more of multiple algorithm modes, between algorithm-1 through algorithm-n. The wireless transceiver circuitry 509 is capable of performing both single and multiple algorithm concurrent interfering transmission and receptions. A plurality of antennas 557 communicatively coupled to the wireless transceiver circuitry 509 enable transmission and receptions in one of plurality of transmission modes. The functioning and construction of single/algorithm-1/algorithm-n concurrent interfering transmitter 511 and single/algorithm-1/algorithm-n concurrent interfering receiver 513 closely parallel to that of downstream transmitter and receiver portions of a wireless access point described with reference to the FIGs. 3 and 4 respectively.

Local storage 561 may be random access memory, read-only memory, flash memory, a disk drive, an optical drive, or another type of memory that is operable to store computer instructions and data. The local storage 561 contains device operating system and application software 565 and single/algorithm-1/algorithm-n concurrent interfering transmission detection and processing software 563. The communication interface 571 allows the wireless end point device 507 to interface with the wireless transceiver circuitry 509.

In other embodiments, the wireless end point device circuitry 507 of the present invention may include fewer or more components than are illustrated as well as lesser or further functionality. In other words, the illustrated wireless device is meant to merely offer one example of possible functionality and construction in accordance with the present invention.

FIG. 6 is an exemplary timing diagram 605 illustrating multiple algorithm concurrent interfering transmission modes, during contention free and contention periods. As the illustration shows, frame A contains a beacon period, single contention free transmission period 611 and single contention transmission period 613. Frame A is adapted by varying duration of single transmission modes 611 and 613 (refer to Frame A, in illustration). Similarly, frame B contains a beacon period, one of multiple algorithm concurrent interfering contention free transmission periods 621 and multiple algorithm concurrent interfering contention periods 623, utilizing algorithm-1 code. Frame B is adapted by varying duration of the algorithm-1 concurrent interfering transmission modes 621 and 623 (refer to Frame B, in illustration). In addition, the illustration shows a frame C containing a beacon period, another of multiple algorithm concurrent interfering contention free transmission periods 631 and multiple algorithm concurrent interfering contention periods 633, which is, utilizing algorithm-n code. Frame C is adapted by varying duration of the multiple algorithm concurrent interfering transmission modes 631 and 633 (refer to Frame C, in illustration). The payload length may also be varied in accordance with channel conditions. The illustration of frames A, B and C correspond to an entire frame approach, wherein the contention free and contention periods are not divided into sub-frames. In a sub-frame approach (not shown), both contention period and contention free periods are broken into sub-frames, each sub-frame adapting one of the single and multiple algorithm concurrent interfering modes.

The channel conditions are determined on the basis of number of associated wireless end point devices within the cell, their capabilities, anticipated bandwidth usage, QOS (Quality of Service) demands, priority of service and idle states, cell overlap interferences, near-far interferences and noises. In single transmission mode, contention free period duration 611 and contention period duration 613 are varied in accordance with channel conditions, to optimize the performance of the wireless access point. Similarly, in one of multiple algorithm concurrent interfering transmission modes, utilizing algorithm-1 or algorithm-n, the contention free period duration 621 or 631 and contention period duration 623 or 633 are varied in accordance with channel conditions.

The beacon signals that determine the accesses to wireless access point in multiple algorithm modes during both contention free period and contention period, and are transmitted to the multiple algorithm concurrent interfering transmissions capable endpoint devices during the beacon period. The beacon signals control the aspects of wireless end point devices that include mode of transmission, contention free period accesses and contention period arbitrations. All associated wireless end point devices respond to the beacon signals and plan their communication accordingly.

FIG. 7 is an exemplary timing diagram 705 illustrating multiple algorithm partial concurrent interfering and full concurrent interfering transmission modes, during contention free and contention periods. Frame A contains a beacon period, one of partial concurrent interfering contention free transmission period 711 and partial concurrent interfering contention period 713, utilizing algorithm-1 (refer to Frame A, in illustration). Similarly, frame B contains a beacon period, one of partial concurrent interfering contention free transmission period 721 and partial concurrent interfering contention period 723, utilizing algorithm-n (refer to Frame B, in illustration). Frame A or B is adapted by varying duration of the partial concurrent interfering transmission modes 711 or 721 and 713 or 723. The partial concurrent interfering transmission modes may vary, for example, from a through n, depending on number of wireless end point devices selected for communication during the frame, the frames A and B illustrate partial concurrent interfering mode n. Frame C contains a beacon period followed by a full concurrent interfering transmission period 731, utilizing algorithm-n (refer to Frame C, in illustration). The payload length may also be varied in accordance with channel conditions. The illustration of frames A, B and C correspond to an entire frame approach, wherein the contention free and contention periods are not divided into sub-frames. In a sub-frame approach (not shown), both contention period and contention free periods are broken into sub-frames, each sub-frame adapting one of the single, partial and full concurrent interfering modes, utilizing one of algorithm modes a through n.

The channel conditions are determined on the basis of number of associated wireless end point devices within the cell, their capabilities, anticipated bandwidth usage, QOS (Quality of Service) demands, priority of service and idle states, cell overlap interferences, near-far interferences and noises. In a partial concurrent interfering transmission mode n, the contention free period duration 711 or 721 and contention period duration 713 or 723 are varied in accordance with channel conditions. The partial concurrent interfering transmission mode allows a limited number of wireless end point devices to transmit or receive data concurrently, and this occurs on the basis of channel being free for transmission or reception in contention free period and on the basis of contention and arbitration during contention period. In case of a full concurrent interfering transmission mode, the transmission period duration 731 is varied in accordance with channel conditions. In full concurrent interfering transmission mode, no restrictions are enforced on wireless end point devices to transmit and receive.

The beacon signals that determine the accesses to wireless access point in various modes during both contention free period and contention period, and are transmitted to the single/multiple algorithm concurrent interfering transmission capable devices during the beacon period. The access modes include both single transmissions mode, partial concurrent interfering transmission modes a through n, and full concurrent interfering transmissions mode, utilizing one of algorithm modes a through n. The decision to provide access in any mode and the duration of access depends on the wireless end point device capabilities and the wireless access point performance considerations.

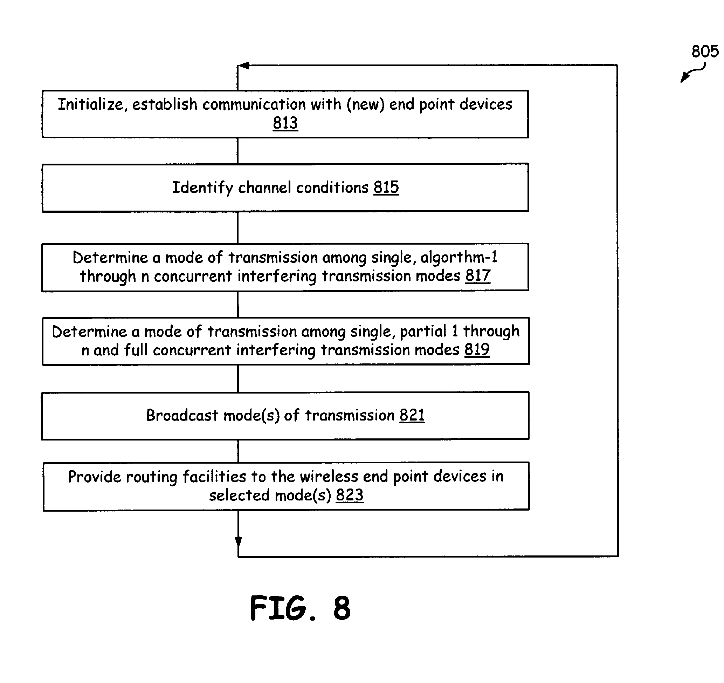

FIG. 8 is a flow diagram 805 illustrating general functionality of a wireless access point that adapts encoding approach and frame parameters of concurrent interfering transmissions and receptions, based on varying channel conditions, in accordance with the present invention. The functionality of the wireless access point begins at a block 813 wherein the wireless access point initializes by making initial assessment of the cell, by establishing communication with the end point devices. In a periodic assessment, at the block 813, the wireless access point may make assessment as applicable only to the wireless end point devices that newly enter the cell. The initial assessment includes identifying the number of wireless end point devices that are attempting to access a backbone network. In addition, the wireless access point queries each of the plurality of wireless end point devices regarding capabilities (in case of a periodic assessment, only new wireless end point devices that arrive into the cell), demands of quality of service, anticipated bandwidth usage and idle states. As a part of initial assessment the wireless access point also identifies any noises and interferences that may occur within the cell. The capabilities of the plurality of wireless end point devices may include single transmissions and receptions capabilities and multiple algorithm concurrent interfering transmissions and receptions capabilities, or both.

At a next block 815, the wireless access point identifies channel conditions. Identification of channel conditions may involve arriving at one or more numerical indicators based on initial or periodic assessment mentioned above, that suggest a mode of transmission for an optimized performance. The mode of transmission include one of single transmissions mode, partial concurrent interfering transmission modes a through n, and full concurrent interfering transmissions mode, utilizing one of algorithm modes a through n.

At a next block 817, the wireless access point determines a mode of transmission among algorithm 1 through n concurrent interfering transmission modes. The consideration for this mode selection is channel conditions. Then, at a next block 819, the wireless access point determines a mode of transmission among single transmission mode, a plurality of partial concurrent interfering transmission modes (say, partial concurrent interfering transmission modes a through n) and full concurrent interfering transmission mode. The adaptation considerations also include payload duration variations. The considerations for adaptation are different for transmission and reception, since the wireless access point's load conditions during transmissions and receptions may vary independently.

Then, at a next block 821, the wireless access point broadcasts mode selection(s) that is applicable to a next frame, a group of sub-frames, or a group of frames within the wireless network infrastructure, during a beacon period. At a next block 823, the wireless access point provides routing facilities to the wireless end point devices in selected mode(s).

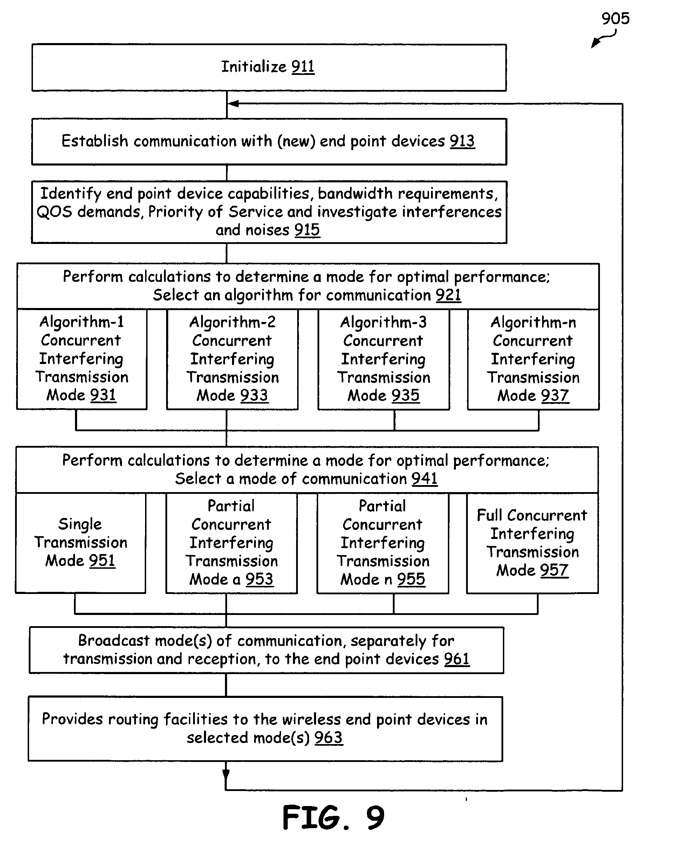

FIG. 9 is a flow diagram 905 illustrating detailed functionality of a wireless access point that adapts encoding approach and frame parameters of concurrent interfering transmissions and receptions, based on varying channel conditions, in accordance with one embodiment of the present invention. The functionality of the wireless access point begins at a block 911, when the access point initializes by making initial assessment of cell. The initial assessment includes identifying the number of associated wireless end point devices, querying each of the plurality of wireless end point devices regarding capabilities, demands of quality of service, anticipated bandwidth usage and idle states. In addition, the wireless access point identifies noises and interferences within the cell. The capabilities of the plurality of wireless end point devices may include single transmissions and receptions capabilities, concurrent interfering transmissions and receptions capabilities and multiple algorithm capabilities.

At a next block 913, the wireless access point establishes communication with wireless end point devices during a beacon period. In a periodic assessment, the access point may attempt to establish communication with new wireless end point devices that entered the cell recently. At a next block 915, the wireless access point identifies device capabilities of the newly entered wireless end point devices, bandwidth requirements, QOS demands and priority of service. The capabilities include single transmissions and receptions capabilities, concurrent interfering transmissions and receptions and multiple algorithm capabilities. In addition, at the block 915, the wireless access point investigates interferences and noises within the cell.

At a next block 921, the wireless access point performs calculations to determine a mode that provides for an optimal performance, utilizing one of multiple algorithm modes and selects that mode of communication. In conjunction with periodic assessment, the wireless access point may also use triggers to select one of the communication modes. The trigger may be a new noise or interference, or sudden entry of one or more new wireless end point devices. The modes are illustrated as event blocks such as algorithm-1 concurrent interfering transmission mode 931, algorithm-2 concurrent interfering transmission mode 933, algorithm-3 concurrent interfering transmission mode a 935 and algorithm-n concurrent interfering transmission mode 937. The algorithm 1 through n concurrent interfering transmission modes illustrated may in practice be many more that range from a through n, depending upon the number of algorithm codes available for selection.

At a next block 941, the wireless access point determines a mode that provides for an optimal performance and selects that mode of communication. The modes here include single transmissions mode, one of partial concurrent interfering transmission modes a through n and full concurrent interfering transmission mode, utilizing the above mentioned algorithm mode selection. In conjunction with of periodic assessment, the wireless access point may also use triggers to select one of the communication modes, such as noise or interference, or sudden entry of one or more new wireless end point devices. The modes are illustrated as event blocks such as single transmission mode 951, partial concurrent interfering transmission mode a 953, partial concurrent interfering mode n 955 and full concurrent interfering transmission mode 957. The partial concurrent interfering transmission modes a and n illustrated may in practice be many more that range from a through n, depending upon the number of wireless end point devices selected for concurrent interfering transmission.

Once a mode is selected, the wireless access point informs this to wireless end point devices by broadcasting it, at a next block 961. The considerations for transmission and receptions, from the point of view of wireless access point, may be different and are also informed to the wireless end point devices. At a next block 963, the wireless access point provides routing facilities to the wireless end point devices in selected mode(s).

The terms "circuit" and "circuitry" as used herein may refer to an independent circuit or to a portion of a multifunctional circuit that performs multiple underlying functions. For example, depending on the embodiment, processing circuitry may be implemented as a single chip processor or as a plurality of processing chips. Likewise, a first circuit and a second circuit may be combined in one embodiment into a single circuit or, in another embodiment, operate independently perhaps in separate chips. The term "chip", as used herein, refers to an integrated circuit. Circuits and circuitry may comprise general or specific purpose hardware, or may comprise such hardware and associated software such as firmware or object code.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled."

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. An access point circuitry supporting reception of concurrent interfering transmissions from a plurality of end point devices, the access point circuitry comprising:
receiver circuitry that receives the concurrent interfering transmissions from the plurality of end point devices, the concurrent interfering transmissions being constructed using a first encoding approach;
processing circuitry, communicatively coupled to the receiver circuitry, that decodes the concurrent interfering transmissions;
transmitter circuitry communicatively coupled to the processing circuitry;
the processing circuitry, based on a change in a channel condition, generates an instruction to change the first encoding approach to a second encoding approach;
the processing circuitry delivers the instruction to at least one of the plurality of end point devices via the transmitter circuitry;
the receiver circuitry receives the concurrent interfering transmissions that is constructed using the second encoding approach; and
the processing circuitry decodes the received the concurrent interfering transmissions that is constructed using the second encoding approach.

2. The access point circuitry of claim 1, wherein the processing circuitry delivers the instruction at the beginning of a frame.

3. The access point circuitry of claim 2, wherein the frame comprising one or more sub-frames.

4. The access point circuitry of claim 2, wherein the instruction is applicable to one of the sub-frames.

5. The access point circuitry of claim 1, wherein the first encoding approach comprising a first concurrent interfering transmission mode.

6. An end point device circuitry that supports concurrent interfering receptions, the end point device circuitry comprising:
receiver circuitry that receives a concurrent interfering transmission;
processing circuitry, communicatively coupled to the receiver circuitry, that detects the concurrent interfering transmission;
the processing circuitry receives an instruction to change a first encoding approach to a second encoding approach;
the processing circuitry responds to the instruction by adapting to the second encoding approach; and
the processing circuitry detects data from the received concurrent interfering transmission that uses the second encoding approach.

7. The end point device circuitry of claim 6, wherein the first encoding approach comprising a first concurrent interfering transmission mode.

8. A method performed by an access point that communicates a plurality of packets with a plurality of end point devices, in a wireless network infrastructure, the method comprising:
establishing communication with each of the plurality of end point devices;
identifying channel conditions;
determining a transmission mode based upon encoding approach and frame parameters;
broadcasting the transmission mode; and
communicating using the transmission mode, with the plurality of end point devices.

9. The method of claim 8, wherein the transmission mode comprising at least one of single transmission mode, full concurrent interfering transmission mode, one of plurality of partial concurrent interfering transmission modes or one of plurality of encoding approach modes.

10. The method of claim 8, wherein each of the plurality of partial concurrent interfering transmission modes allow selected number of the plurality of end point devices to transmit or receive concurrently.
